Europäisches Patentamt

European Patent Office

Office européen des brevets

(11) Veröffentlichungsnummer: **0 222 323 B1**

(12) **EUROPÄISCHE PATENTSCHRIFT**

(45) Veröffentlichungstag der Patentschrift: **19.06.91**

(51) Int. Cl.⁵: **F16L 11/12**

(21) Anmeldenummer: **86115370.8**

(22) Anmeldetag: **06.11.86**

(54) **Schlauch.**

(30) Priorität: **06.11.85 DE 3539289**

(43) Veröffentlichungstag der Anmeldung:
**20.05.87 Patentblatt  87/21**

(45) Bekanntmachung des Hinweises auf die
Patenterteilung:
**19.06.91 Patentblatt  91/25**

(84) Benannte Vertragsstaaten:
**AT BE DE FR GB IT SE**

(56) Entgegenhaltungen:
**BE-A- 700 947**
**DE-A- 1 778 760**
**DE-A- 2 905 610**
**DE-B- 1 249 514**
**GB-A- 1 001 043**

(73) Patentinhaber: **Continental Gummi-Werke Aktiengesellschaft**
**Königsworther Platz 1**
**W-3000 Hannover 1(DE)**

Patentinhaber: **Ehlers, Karlheinz**
**Schnackenburgallee 121 Postfach 54 01 66**
**W-2000 Hamburg 54(DE)**

(72) Erfinder: **Ehlers, Karlheinz**
**Schnackenburgallee 121**
**W-2000 Hamburg 54(DE)**
Erfinder: **Emde, Willi**
**Mühlenstrasse 18**
**W-3546 Vöhl-Basdorf(DE)**
Erfinder: **Füllgrabe, Manfred**
**Leipziger Strasse 23**
**W-3540 Korbach(DE)**
Erfinder: **Niklaus, Gerd**
**Amt Wölpe 7**
**W-3057 Neustadt 1(DE)**
Erfinder: **Wydra, Wolfgang**
**Siedlung 5**
**W-3546 Vöhl-Obernburg(DE)**

(74) Vertreter: **Depmeyer, Lothar**
**i. Fa. Continental Gummi-Werke AG Königsworther Platz 1 Postfach 169**
**W-3000 Hannover 1(DE)**

## Beschreibung

Die Erfindung bezieht sich auf Schläuche aus natürlichem oder synthetischem Gummi mit einer seine Innenwand überdeckenden Auskleidung aus einer fluorhaltigen Kunststoffolie sowie auf Verfahren zum Herstellen solcher Schläuche.

Zum Fördern von aggressiven Flüssigkeiten wie Säuren, Laugen oder auch Mineralölprodukten und anderen Lösungsmitteln sind die hierfür verwendeten Schläuche mit einer chemisch beständigen Innenschicht auszukleiden. Dies gilt unabhängig von dem spezifischen Schlauchaufbau mit der den verschiedenartigen Anforderungen hinsichtlich Druck- und Saugfestigkeit, Biegewilligkeit und anderen Kenngrößen angepaßten Werkstoffauswahl sowie Art und Anordnung der Verstärkungseinlagen in gleichem Maße für Schläuche in ortsfesten und fahrbaren Betankungsanlagen, d.h. für sogenannte Betankungs- oder auch Bunkerschläuche, wie ebenfalls für die in Betrieben der chemischen, pharmazeutischen und der Nahrungs- und Genußmittelindustrie u. dgl. eingesetzten Schläuche. Als in breitem Rahmen gegen alle gebräuchlichen Durchflußmedien unempfindlicher Universalwerkstoff für die Auskleidung solcher Schläuche haben sich mit Abstand vor anderen fluorhaltige Kunststoffe wie beispielsweise Polytetra-Fluoräthylen und andere Fluorthermoplaste bewährt.

Der hervorragenden Beständigkeit von Fluorpolymeren stehen als Nachteile aber ihre schwierige Verarbeitung und insbesondere ihre geringe Hafffähigkeit an anderen Stoffen gegenüber. Speziell für den Einsatz als Schlauchauskleidungen sind außerdem die Forderungen nach einer glattzylindrischen Schlauchinnenmantelfläche sowie leichter Handhabung mit möglichst wenig beeinträchtigter Biegewilligkeit der Schläuche im Gebrauch zu berücksichtigen. Mit Rücksicht auf die hohe Härte der Fluorkunststoffe und auch aus Preisgründen empfiehlt es sich in aller Regel, die Auskleidung aus einer vergleichsweise nur sehr dünnen Folie herzustellen. In jedem Falle besteht aber die Gefahr, daß die Kunststoffauskleidung im Bereiche starker Schlauchkrümmungen örtlich einerseits überdehnt und andererseits stark gestaucht wird, so daß die bisher erzielbare Haftung in diesen Bereichen nicht ausreichte, um die Bildung von Falten und Ablösungen oder auch ein Einreißen der Folie zu verhindern.

Es war zwar aus der DE-A-29 05 610 ein Schlauch mit einer hitzebeständigen Schutzummantelung bekannt, bei dem zwischen der als pastenförmige Beschichtung erzeugten Ummantelung und der darunterliegenden Schlauchwandung ein hitzebeständiges, streifenförmig aufgebrachtes Gewebe angeordnet war, das neben seiner hitzeabschirmenden Wirkung auch die Haftung der Schutzummantelung verbessern sollte; eine analoge Übertragung dieser Technik auf die Erzeugung eines Schlauches mit Fluorkunststoff-Innenauskleidung war jedoch wegen der Dehäsivität der Fluorkunststoffe und der erheblich höheren mechanischen Beanspruchung der Haftung an der Schlauchinnenseite zum Scheitern verurteilt.

Der Erfindung liegt daher die Aufgabe zugrunde, einen Schlauch der vorstehend beschriebenen Art zu schaffen, bei dem der Zusammenhalt der Fluorkunststoffolien-Auskleidung mit dem Gummi der Schlauchwandung ohne Zugeständnisse an seine allgemeine Gebrauchstüchtigkeit und insbesondere an seine Biegsamkeit unter allen vorkommenden Beanspruchungen sowohl bei Druck- als auch bei Saugbetrieb sicher gewährleistet ist.

Diese Aufgabe wird, ausgehend von Schläuchen der eingangs genannten Art, durch einen Schlauch gelöst, der die im kennzeichnenden Teil des Patentanspruchs 1 angegebenen Merkmale aufweist.

Zur Herstellung des Schlauches wird ein Verfahren gemäß Anspruch 12 vorgeschlagen.

Der den Fluorkunststoffen eigene Mantel an stoffschlüssiger Haftung wird erfindungsgemäß verblüffend einfach und vergleichsweise kostengünstig insbesondere dadurch kompensiert, daß als Haftungsbrücke ein die Fluorkunststoff-Auskleidungsfolie nahtlos umschließendes Geflecht dient und daß dessen innenliegende Fadenabschnitte bzw. deren Fasern von dem Fluorkunststoff umschmolzen sind. Das Umschmelzen bewirkt eine derart intensive formschlüssige Verankerung der Fluorkunststoff-Auskleidung an dem Geflecht und über dieses an der übrigen Schlauchwandung, daß der erfindungsgemäße Schlauch allen im praktischen Einsatz auftretenden - insbesondere auch mechanischen - Beanspruchungen sicher standhält.

Das erfindungsgemäß eingebettete textile Geflecht dient ausschließlich als Bindungsvermittler zwischen der naturgemäß nur schlecht zum Haften zu bringenden Fluorkunststoff-Auskleidung und dem Gummiinnenmantel der Schlauchwand. Konstruktion und Aufbau der übrigen Bestandteile der Schlauchwandung sind davon nicht betroffen und können für den jeweils vorliegenden Bedarfsfall in zweckmäßig abgestimmter Auswahl und Anordnung optimiert werden. Da das textile Geflecht gemäß der vorliegenden Erfindung nicht wie übliche Armierungsgeflechte in Druckschläuchen eine den Schlauchinnendruck aufnehmende Funktion zu erfüllen braucht und auch nicht erfüllen soll, kann es so ausgelegt werden, daß es die Biegsamkeit des Schlauches minimal beeinträchtigt. Es ist daher vorzugsweise als sogenanntes stumpfwinkeliges Geflecht ausgeführt, also als ein Geflecht, bei dem die sogenannten Fadenwinkel mehr als 55° betragen.

Die Wirkungsweise der erfindungsgemäßen haftungsvermittelnden textilen Geflechte beruht darauf, daß infolge der im Verlaufe der Schlauchherstellung erfolgten Wärmeeinleitung einerseits geschmolzene Fluorkunststoffmasse und andererseits erweichter Gummi um die Geflechtsfäden herumgeflossen ist, so daß die Fäden in den Abschnitten, in denen sie an der dem Schlauchinnern zugewandten Seite des Geflechts verlaufen, von Fluorkunststoff und in den Abschnitten, in denen sie an dessen Außenseite verlaufen, von Gummi mindestens teilweise hinter- bzw. umfaßt sind.

Dabei ist es wichtig darauf zu achten, daß ein Durchschlagen der Fluorkunststoffmasse von der einen und der Gummimasse von der anderen Seite durch das textile Geflecht hindurch vermieden wird. Außerdem ist es vorteilhaft, wenn das textile Geflecht in seinem Innern - also etwa im Bereich seiner Mittelebene - von eindringendem Fluorkunststoff und Gummi ganz freibleibt; denn hierdurch bleiben die Fäden und Fasern in diesem Bereich zueinander frei beweglich und insbesondere verschiebbar, und eine die Biegsamkeit des Schlauches beeinträchtigende Versteifung der Schlauchwand wird vermieden.

Die erfindungsgemäß erzielte beidseitige formschlüssige Verankerung, die sich auf der Gummiseite der dort im allgemeinen ohnehin vorhandenen stoffschlüssigen Bindung überlagert, kann erfindungsgemäß dadurch noch weiter verbessert werden, daß das textile Geflecht aus offenen Zwirnen hergestellt ist, in deren Faserzwischenräumen der Fluorkunststoff bzw. der Gummi zusätzlichen Halt findet. Ferner kann der mechanische Verankerungseffekt dadurch gesteigert werden, daß die Fasern des textilen Geflechts eine nichtglatte, strukturierte Mantelfläche aufweisen.

Ein besonders wirksamer Beitrag zur Verankerung einerseits des Fluorkunststoffes und andererseits des Gummis an dem textilen Geflecht kann dadurch erzielt werden, daß dessen zwirnförmige Fäden eine Vielzahl abstehender freier Faserenden aufweisen, die dann - vergleichbar mit den Wurzeln eines Baumes - in die Fluorkunststoff- bzw. Gummimasse eingebettet sind und so den zugehörigen Fadenabschnitten einen sicheren Halt geben. Diese wurzelartige Verankerung wirkt auch dort, wo der Fluorkunststoff bzw. Gummi die Fäden nicht insgesamt hinterfaßt oder umfaßt, sondern nur gerade bis an die Fäden heranreicht und dabei lediglich die abstehenden Faserenden umfaßt.

In einer weiteren vorteilhaften Ausführungsform der vorliegenden Erfindung besteht das eingebettete textile Geflecht zu einem wesentlichen Teil aus Fäden, die in an sich bekannter Weise gummifreundlich imprägniert sind, und zu einem anderen wesentlichen Teil aus Fäden, die mit einer Lösung oder Schmelze des Fluorkunststoffs imprägniert oder überzogen sind. Beispielsweise beträgt das Verhältnis der derart unterschiedlich vorbehandelten Fäden in dem textilen Geflecht etwa 50 : 50. Hierdurch kann erreicht werden, daß auch an der dem Fluorkunststoff zugewandten Innenfläche des textilen Geflechts sowie an der dem Gummi zugewandten Außenfläche entsprechende Fadenanteile vorliegen, die dann entsprechend anteilig einerseits am Fluorkunststoff und andererseits am Gummi haften. In den Fällen, in denen die Bindung des Gummis an den Fäden bzw. Fasern des verwendeten textilen Geflechts unproblematisch ist, kann auch auf die gummifreundliche Imprägnierung des betreffenden Faden- bzw. Faseranteils verzichtet werden. Der beschriebene Erfindungsgedanke umfaßt faßt auch die Möglichkeit, ein aus einem Mischgarn aufgebautes textiles Geflecht zu verwenden, wobei dieses Mischgarn entsprechend anteilig aus gummifreundlichen und mit einer Fluorkunststoffimprägnierung ausgerüsteten Fasern besteht.

Zum Herstellen der Schläuche nach der vorliegenden Erfindung wird vorgeschlagen wie folgt verfahren: Zunächst wird die Auskleidung in Form eines Fluorkunststoffolien-Streifens in einer oder mehreren einander überdeckenden Lage(n) wendelig auf einen Anfertigungsdorn gewickelt. Hierauf wird das textile Geflecht so aufgebracht, daß es den Auskleidungs-Wickel enganliegend umschließt. Danach erfolgt der Aufbau der übrigen Schlauchwandung, und schließlich wird der vollständige Schlauch vulkanisiert, wobei gleichzeitig der Fluorkunststoff schmilzt und sich - ebenso wie andererseits der Gummi - fest an dem textilen Geflecht verankert.

Vorzugsweise erfolgt bereits zwischen dem vollständigen Aufbringen des textilen Geflechts und dem weiteren Aufbau der Schlauchwandung eine Erhitzung auf die Schmelztemperatur des Fluorkunststoffes. Hierdurch kann unabhängig von der Vulkanisationstemperatur dafür gesorgt werden, daß der Fluorkunststoff die Fäden bzw. Fasern des textilen Geflechts eng umfließt und räumlich hinterfaßt bzw. umfaßt.

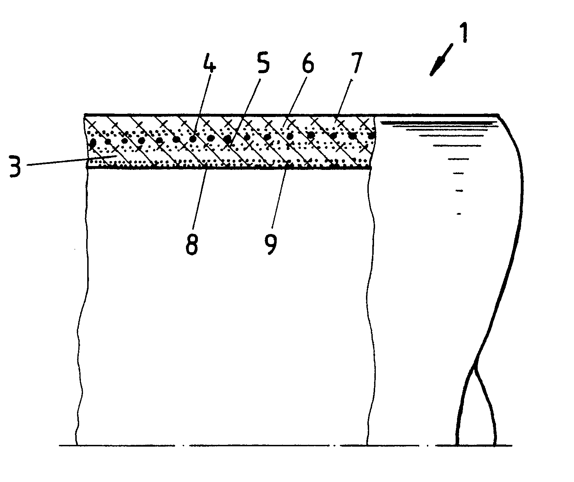

Die Zeichnung verdeutlicht die Erfindung anhand eines schematisch im Längsschnitt dargestellten Ausführungsbeispiels.

Der dargestellte Schlauch 1 ist universell zur Verwendung in der chemischen oder pharmazeutischen ebenso wie in der Nahrungs- und Genußmittel-Industrie oder auch als Betankungsschlauch verwendbar. Seine Lösungsmittel- und Chemikalienbeständigkeit ist durch die aus einer Fluorkunststoffolie gebildete Auskleidung 8 begründet. Im übrigen weister, wie an sich bekannt, einen Innenschlauch 3 aus synthetischem Gummi, zwei Armierungs-Geflechtslagen 5 und 6, die beiderseits einer vollständig in Gummi eingebetteten Drahtwendel 4 angeordnet sind, sowie eine Außenmantelgummischicht 7 auf.

Um eine feste Bindung der Auskleidung 8 zum Gummi des Innenschlauches 3 zu schaffen, ist zwischen diesen bei den Schlauchschichten ein textiles Geflecht 9 eingefügt, an dem einerseits die Fluorkunststoff-Auskleidung 8 und andererseits der Gummi-Innenschlauch 3 fest verankert ist.

**Ansprüche**

1. Schlauch aus natürlichem oder synthetischem Gummi mit einer seine Innenwand überdekkenden, fest mit dieser verbundenen Auskleidung aus einer fluorhaltigen Kunststoffolie, **dadurch gekennzeichnet,** daß eine flächige Verbindung zwischen der fluorhaltigen Auskleidungsfolie (8) und der Schlauchinnenwand (3) dadurch erzeugt ist, daß zwischen der Auskleidungsfolie (8) und der Schlauchinnenwand (3) ein aus textilen Fäden aufgebautes textiles Geflecht (9) derart eingebettet ist, daß dessen innenliegende Fadenabschnitte bzw. deren Fasern mindestens teilweise von dem Kunststoff der Auskleidungsfolie (8) umschmolzen und dessen außenliegende Fadenabschnitte bzw. deren Fasern mindestens teilweise von dem Gummi der Schlauchinnenwand (3) hinter- oder umfaßt sind.

2. Schlauch nach Anspruch 1, dadurch gekennzeichnet, daß das Geflecht ein stumpfwinkliges Geflecht ist.

3. Schlauch nach Anspruch 1 oder 2, dadurch gekennzeichnet, daß das Geflecht aus offenen Zwirnen hergestellt ist.

4. Schlauch nach einem der Ansprüche 1 bis 3, dadurch gekennzeichnet, daß das Geflecht aus Zwirnen hergestellt ist, deren Fasern eine nichtglatte, strukturierte Mantelfläche aufweisen.

5. Schlauch nach einem der Ansprüche 1 bis 4, dadurch gekennzeichnet, daß das Geflecht aus Zwirnen hergestellt ist, die eine Vielzahl abstehender, freier Faserenden aufweisen.

6. Schlauch nach einem der Ansprüche 1 bis 5, dadurch gekennzeichnet, daß das Geflecht zu einem wesentlichen Teil aus Fäden besteht, die eine gummifreundliche Oberfläche aufweisen, insbesondere in an sich bekannter Weise gummifreundlich imprägniert sind, und zu einem anderen wesentlichen Teil aus Fäden, die mit einer Lösung oder Schmelze des Fluorkunststoffs imprägniert oder überzogen sind, aus dem die Auskleidungsfolie besteht.

7. Schlauch nach einem der Ansprüche 1 bis 6, dadurch gekennzeichnet, daß das Geflecht aus Mischgarnen aufgebaut ist, wobei diese Mischgarne zu einem wesentlichen Teil aus Fasern bestehen, die eine gummifreundliche Oberfläche aufweisen, insbesondere gummifreundlich ausgerüstet sind, und zu einem anderen wesentlichen Teil aus Fasern, die eine Ausrüstung mit dem Fluorkunststoff aufweisen, aus dem die Auskleidungsfolie besteht.

8. Schlauch nach Anspruch 6 oder 7, dadurch gekennzeichnet, daß das Mengenverhältnis der Fäden bzw. Fasern mit gummifreundlicher Oberfläche zu den Fäden bzw. Fasern mit Fluorkunststoff-Ausrüstung etwa 50 : 50 beträgt.

9. Schlauch nach einem der Ansprüche 1 bis 8, dadurch gekennzeichnet, daß das Geflecht aus trockener Baumwolle besteht oder zu einem wesentlichen Anteil trockene Baumwolle enthält.

10. Schlauch nach einem der Ansprüche 1 bis 9, dadurch gekennzeichnet, daß die Auskleidungsfolie aus einem Fluorkunststoff besteht, dessen Schmelzpunkt bei höchstens 170° C liegt.

11. Schlauch nach einem der Ansprüche 1 bis 10, dadurch gekennzeichnet, daß die Fluorkunststoffolie eine Stärke von 0,1 bis 0,8 mm, vorzugsweise von 0,2 bis 0,6 mm aufweist.

12. Verfahren zum Herstellen eines Schlauches nach einem der Ansprüche 1 bis 11, dadurch gekennzeichnet, daß die Auskleidung in Form eines Fluorkunststoffolien-Streifens in einer oder mehreren einander überdeckenden Lage(n) wendelig auf einen Anfertigungsdorn gewikkelt, enganliegend von dem Geflecht umschlossen und darauf die übrige Schlauchwandung in an sich bekannter Weise aufgebaut und vulkanisiert wird.

13. Verfahren nach Anspruch 12, dadurch gekennzeichnet, daß nach dem Aufbringen des Geflechts und vor dem Aufbau der übrigen Schlauchwandung eine Erhitzung auf die Schmelztemperatur der Fluorkunststoffolie erfolgt.

**Claims**

1. Hose formed from natural or synthetic rubber, having a coating formed from a fluorine-containing plastics material film which covers the internal wall of the hose and is firmly bonded thereto, characterised in that a surface-to-surface bonding between the fluorine-containing coating film (8) and the internal wall (3) of the hose is produced when a textile mesh (9), which is formed from textile filaments, is embedded between the coating film (8) and the internal wall (3) of the hose in such a manner that the internally situated filament portions of said mesh, or their fibres, are at least partially melted by the plastics material of the coating film (8), and the externally situated filament portions of said mesh, or their fibres, are at least partially gripped behind or around by the rubber of the internal wall (3) of the hose.

2. Hose according to claim 1, characterised in that the mesh is an obtuse-angled mesh.

3. Hose according to claim 1 or 2, characterised in that the mesh is produced from open twines.

4. Hose according to one of claims 1 to 3, characterised in that the mesh is produced from twines, the fibres of which have an uneven, structured surface.

5. Hose according to one of claims 1 to 4, characterised in that the mesh is produced from twines which have a plurality of protruding, free fibre ends.

6. Hose according to one of claims 1 to 5, characterised in that a substantial portion of the mesh is formed from filaments which have a rubber-friendly surface, and in particular they are impregnated in a manner known per se so as to be rubber-friendly, and another substantial portion of the mesh is formed from filaments which are impregnated or coated with a solution or melt of the fluorine-containing plastics material, from which the coating film is formed.

7. Hose according to one of claims 1 to 6, characterised in that the mesh is formed from mixed yarns, a substantial portion of these mixed yarns being formed from fibres which have a rubber-friendly surface, and in particular they are provided in a rubber-friendly manner, and another substantial portion of these mixed yarns is formed from fibres which are provided with the fluorine-containing plastics material from which the coating film is formed.

8. Hose according to claim 6 or 7, characterised in that the ratio of the filaments or fibres with a rubber-friendly surface relative to the filaments or fibres provided with fluorine-containing plastics material is approximately 50 : 50.

9. Hose according to one of claims 1 to 8, characterised in that the mesh is formed from dry cotton or contains a substantial portion of dry cotton.

10. Hose according to one of claims 1 to 9, characterised in that the coating film is formed from a fluorine-containing plastics material with a maximum melting point of 170° C.

11. Hose according to one of claims 1 to 10, characterised in that the fluorine-containing plastics material film has a thickness of 0.1 to 0.8 mm, and preferably a thickness of 0.2 to 0.6 mm.

12. Method of producing a hose according to one of claims 1 to 11, characterised in that the coating is helically wound onto a production mandrel in the form of a strip of fluorine-containing plastics material film in one ply or in a plurality of plies overlapping one another and is closely surrounded by the mesh, and the remaining hose wall is subsequently constructed and vulcanised in a manner known per se.

13. Method according to claim 12, characterised in that, after the application of the mesh and prior to the construction of the remaining hose wall, heating is effected up to the melting temperature of the fluorine-containing plastics material film.

**Revendications**

1. Tuyau souple en caoutchouc naturel ou synthétique, avec un garnissage, constitué d'une feuille de matière plastique contenant du fluor, qui recouvre la paroi intérieure du tuyau souple et lui est fixement assemblé, **caractérisé** en ce qu'un assemblage plan est produit entre la feuille de garnissage (8) contenant du fluor et la paroi intérieure (3) du tuyau souple par le fait qu'une tresse (9), constituée de fils textiles, est insérée entre la feuille de garnissage (8) et la paroi intérieure (3) du tuyau souple de telle sorte que ses parties de fils ou ses fibres situées a l'intérieur sont au moins partiellement entourées par fusion de la matière plastique de la feuille de garnissage (8), et que ses parties de fils ou ses fibres situées à l'extérieur sont au moins partiellement enveloppées par le caoutchouc de la paroi intérieure (3) du tuyau souple.

2. Tuyau souple selon la revendication 1, caractérisé en ce que la tresse est une tresse à angle obtus.

3. Tuyau souple selon la revendication 1 ou 2, caractérisé en ce que la tresse est réalisée à partir de retors ouverts.

4. Tuyau souple selon l'une des revendications 1 à 3, caractérisé en ce que la tresse est réalisée à partir de retors dont les fibres présentent une surface structurée, non lisse.

5. Tuyau souple selon l'une des revendications 1 à 4, caractérisé en ce que la tresse est réalisée à partir de retors qui présentent une multiplicité d'extrémités de fibres fibres, partant en saillie.

6. Tuyau souple selon l'une des revendications 1 à 5, caractérisé en ce que la tresse est constituée pour une part importante de fils qui présentent une surface attirant le caoutchouc, notamment qui sont imprégnés d'une manière connue attirant le caoutchouc, et pour une autre part importante de fils qui sont imprégnés ou revêtus d'une solution ou d'une masse fondue de la matière plastique fluorée dont est constituée la feuille de garnissage.

7. Tuyau souple selon l'une des revendications 1 à 6, caractérisé en ce que la tresse est constituée de fils mixtes, ces fils mixtes étant constitués pour une part importante de fibres qui présentent une surface attirant le caoutchouc, notamment qui présentent un apprêt attirant le caoutchouc, et pour une autre part importante de fibres qui présentent un apprêt de la matière plastique fluorée dont est constituée la feuille de garnissage.

8. Tuyau souple selon la revendication 6 ou 7, caractérisé en ce que le rapport quantitatif entre les fils ou fibres à surface attirant le caoutchouc et les fils ou fibres à apprêt en matière plastique fluorée est d'environ 50 : 50.

9. Tuyau souple selon l'une des revendications 1 à 8, caractérisé en ce que la tresse est constituée de coton sec, ou contient une proportion importante de coton de sec.

10. Tuyau souple selon l'une des revendications 1 à 9, caractérisé en ce que la feuille de garnissage est constituée d'une matière plastique fluorée dont le point de fusion est au plus égal à 170° C.

11. Tuyau souple selon l'une des revendications 1 à 10, caractérisé en ce que la feuille de matière plastique fluorée présente une épaisseur de 0,1 à 0,8 mm, de préférence de 0,2 à 0,6 mm.

12. Procédé de fabrication d'un tuyau souple selon l'une des revendications 1 à 11, caractérisé en ce qu'on enroule en spirale sur un mandrin de confection, en une ou plusieurs couches en chevauchement, le garnissage qui se présente sous la forme d'une feuille de matière plastique fluorée en bande, puis on l'entoure en application étroite de la tresse, sur laquelle on constitue et vulcanise, d'une manière en soi connue, le reste de la paroi du tuyau souple.

13. Procédé selon la revendication 12, caractérisé en ce qu'à la suite de la mise en place de la tresse et avant la constitution du reste de la paroi du tuyau souple, on effectue un réchauffement à la température de fusion de la feuille de matière plastique fluorée.